# FASCICULE DE BREVET EUROPEEN

(11) **EP 2 507 962 B1**
(45) Date de publication et mention de la délivrance du brevet: **30.08.2017**
(21) Numéro de dépôt: 10807449.3
(22) Date de dépôt: 29.11.2010
(51) Int. Cl.: H04L 5/00

(54) **PROCÉDÉ ET DISPOSITIF DE RÉDUCTION DE LA CONSOMMATION ÉLECTRIQUE ASSOCIÉE A UNE LIGNE DE COMMUNICATION**
VERFAHREN UND VORRICHTUNG ZUR VERRINGERUNG DES STROMVERBRAUCHS IM ZUSAMMENHANG MIT EINER KOMMUNIKATIONSLEITUNG
METHOD AND DEVICE FOR REDUCING THE ELECTRICITY CONSUMPTION ASSOCIATED WITH A COMMUNICATION LINE

(30) Priorité: 30.11.2009 FR 0958494
(43) Date de publication de la demande: 10.10.2012
(73) Titulaire: Orange, 75015 Paris (FR)
(72) Inventeur: ANDRE, Jean-Marie, F-22590 Tregomeur (FR); MARIOTTE, Hubert, Perros Guirec 22700 (FR)
(86) Numéro de dépôt international: PCT/FR2010/052561
(87) Numéro de publication internationale: WO 2011/064513

(56) Documents cités:
- EP-A1- 1 998 524
- US-A1- 2005 213 405
- US-B1- 6 259 746

## Description

La présente invention concerne le domaine des communications, et plus particulièrement la consommation électrique des équipements associés à des lignes numériques d'abonné.

Des techniques de communication permettent de transmettre et de recevoir des signaux numériques à des débits élevés. Ces techniques de communication regroupées sous le terme générique de DSL ou xDSL sont par exemple l'ADSL (pour "Asymmetric Digital Subscriber Line") et ses évolutions ADSL2, ADSL2plus, le SDSL (pour "Symetric Digital Subscriber Line") ou encore le VDSL (pour "Very hight bitrate Digital Subscriber Line") et le VDSL2.

Dans le cadre du développement durable, il est souhaitable de diminuer la consommation des équipements associés à des lignes de communication. Le document US 6,259,746 décrit un procédé de réduction de la consommation électrique d'une ligne de communication comprenant plusieurs porteuses. Selon ce procédé, les porteuses sont triées en fonction de leur capacité et un volume d'information à transmettre est attribué d'abord à la porteuse de plus grande capacité puis progressivement aux autres porteuses en fonction de leur capacité jusqu'à ce que le volume d'informations soit attribué. La puissance des porteuses non utilisées est alors réduite. Le standard ITU-T G.992.3 décrit un mode, appelé mode L2, permettant de réduire la puissance d'une ligne ADSL2 en cas de baisse de trafic. Plus précisément, ce mode permet de réduire la puissance d'émission d'un signal descendant, c'est-à-dire dans le sens central vers l'équipement du client, d'une ligne numérique d'abonné.

Une ligne ADSL2 comporte un certain nombre de porteuses pour le transport des données. Certaines de ces porteuses sont réservées au transport des données dans le sens montant (du client vers le central). D'autres sont réservées au transport des données dans le sens descendant (du central vers le client).

Lorsque le trafic est important (mode L0), chaque porteuse a une puissance prédéterminée nécessaire pour le transport des données.

Lors du passage dans le mode L2, la puissance de chaque porteuse est diminuée d'un nombre de décibels prédéterminé. Une diminution de 10 dB (pour "décibels") peut par exemple engendrer une économie d'énergie de 500 mW par ligne ADSL2.

Cependant, ce mode engendre de très fortes variations de puissance de bruit sur les lignes voisines. Ces variations ont pour conséquence de nombreuses perturbations telles que pertes de signal, taux d'erreur important, resynchronisation.

Il existe donc un besoin d'un mode basse consommation ne perturbant pas les lignes voisines.

L'invention vient améliorer la situation.

A cet effet, l'invention se rapporte à un procédé de réduction de la consommation électrique associée à une ligne de communication comprenant un ensemble de N porteuses de puissance prédéterminée aptes à transmettre des informations vers un dispositif de réception caractérisé en ce qu'il comprend les étapes suivantes :
- détermination préalable d'un premier et d'un second groupe comprenant respectivement au moins une porteuse de l'ensemble N;
- détermination d'un volume d'informations à transmettre sur les N porteuses pendant une unité de temps;
- si le volume déterminé est inférieur à un seuil prédéterminé, attribution d'une puissance inférieure à la puissance prédéterminée aux porteuses du second groupe, la puissance des porteuses du premier groupe étant maintenue.

La juxtaposition de porteuses de puissance diminuée et de porteuses à forte puissance permet de diminuer la consommation électrique tout en limitant les perturbations sur les lignes voisines.

Le maintien d'au moins une porteuse à forte puissance permet de moins perturber les lignes voisines lors du changement de mode, c'est-à-dire lors du passage d'un mode à pleine puissance, où toutes les porteuses ont la puissance prédéterminée P, à un mode à puissance réduite ou lors du passage d'un mode à puissance réduite à un mode à pleine puissance.

Selon un mode de réalisation particulier du procédé de réduction de la consommation électrique, la puissance attribuée aux porteuses du second groupe est d'une valeur prédéterminée.

Ce mode de réalisation présente l'avantage d'être simple puisqu'il ne nécessite pas de calcul de puissance à attribuer.

Selon un autre mode de réalisation particulier du procédé de réduction de la consommation électrique utilisé seul ou en combinaison avec le mode de réalisation précédent, une porteuse du premier groupe est comprise entre deux porteuses du second groupe.

Ce mode de réalisation est simple à mettre en oeuvre. L'alternance de porteuses à pleine puissance et de porteuses à puissance diminuée permet une diminution importante de la consommation. De plus, les perturbations sur les lignes voisines sont moindres que celles engendrées par le mode L2.

Selon un autre mode de réalisation particulier du procédé de réduction de la consommation électrique, le premier groupe comporte au moins un ensemble de porteuses consécutives.

Ce mode permet de diminuer davantage les perturbations sur les lignes voisines.

Selon un mode de réalisation particulier du procédé de réduction de la consommation électrique, la puissance attribuée est une valeur comprise entre une valeur de puissance minimum prédéterminée et la puissance prédéterminée.

Ce mode permet de limiter davantage les perturbations sur les lignes voisines tout en ayant un gain en consommation important.

Selon un mode de réalisation particulier du procédé de réduction de la consommation électrique, le premier groupe est constitué d'une porteuse.

Selon une caractéristique de ce mode de réalisation, l'ensemble des porteuses est un ensemble ordonné, le second groupe comprend un premier sous groupe contenant les porteuses de rang inférieur à la porteuse du premier groupe et un deuxième sous groupe contenant les porteuses de rang supérieur à la porteuse du premier groupe, la puissance attribuée aux porteuses du premier sous groupe augmente en fonction du rang de la porteuse et la puissance attribuée aux porteuses du second sous groupe diminue en fonction du rang.

Ce mode de réalisation est d'implémentation facile. La distribution des puissances en forme de "toit" limite fortement l'impact sur les lignes de communication voisine.

L'invention concerne également un dispositif de réduction de la consommation électrique associée à une ligne de communication comprenant un ensemble de N porteuses de puissance prédéterminée aptes à transmettre des informations vers un dispositif de réception caractérisé en ce qu'il comprend :
- des moyens de détermination préalable d'un premier et d'un second groupe comprenant respectivement au moins une porteuse de l'ensemble N;
- des moyens de détermination d'un volume d'informations à transmettre sur les N porteuses pendant une unité de temps;
- des moyens d'attribution d'une puissance inférieure à la puissance prédéterminée aux porteuses du second groupe si le volume déterminé est inférieur à un seuil prédéterminé, la puissance des porteuses du premier groupe étant maintenue.

L'invention concerne enfin un produit programme d'ordinateur comprenant des instructions pour mettre en oeuvre les étapes du procédé de réduction de la consommation électrique tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 illustre le contexte général de l'invention selon un mode de réalisation,
- la figure 2 est un schéma illustrant un dispositif de réduction de consommation électrique selon un premier mode de réalisation,
- la figure 3 est un organigramme illustrant les différentes étapes d'un procédé de réduction de consommation électrique de l'invention,
- la figure 4 est un schéma illustrant un premier mode de réalisation du procédé de réduction de l'invention,
- la figure 5 est un schéma illustrant un deuxième mode de réalisation du procédé de réduction de l'invention,
- la figure 6 est un schéma illustrant un troisième mode de réalisation du procédé de réduction de l'invention.

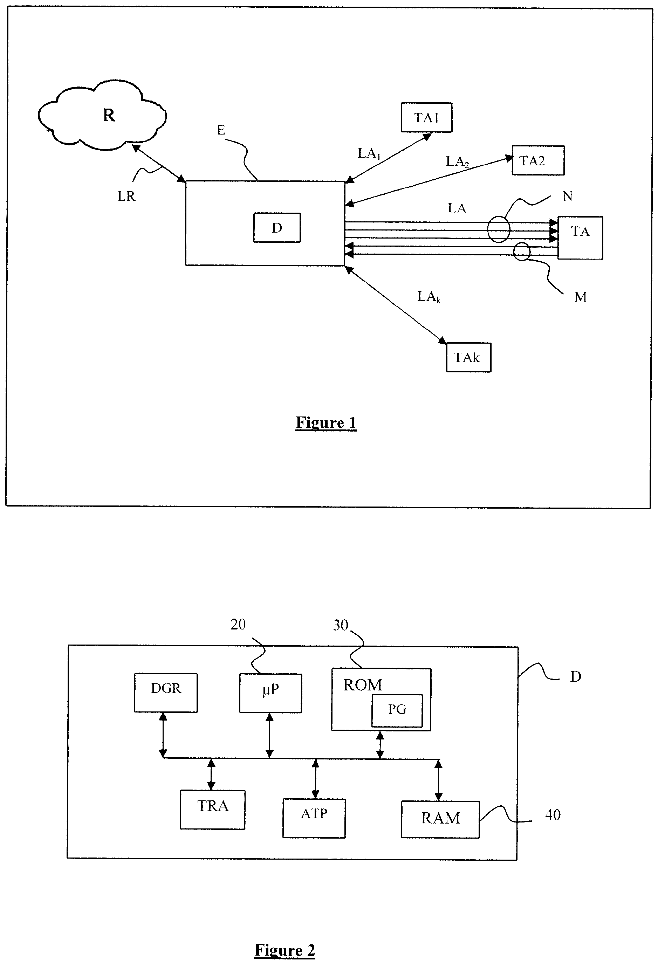

La figure 1 est un schéma illustrant le contexte général de l'invention selon un mode de réalisation.

Un DSLAM (pour "Digital Subscriber Line Access Multiplexer") E, installé par exemple dans les locaux d'un autocommutateur, est apte à recevoir des informations d'un réseau R, tel que par exemple le réseau Internet, via une ligne de communication LR d'un premier type et à les retransmettre à un terminal d'abonné TA, TA₁, TA₂, ...TAₖ via une ligne de communication LA, LA₁, LA₂, ... LAₖ d'un second type.

La ligne de communication LR de premier type est par exemple une liaison Ethernet. Les lignes de communication LA, LA₁, LA₂,...LAₖ de second type sont par exemple des lignes ADSL2.

Le DSLAM E est également apte à transmettre des informations provenant d'un des terminaux d'abonné TA, TA₁, TA₂,...TAₖ via une ligne de communication LA, LA₁, LA₂...LAₖ de second type en direction du réseau via la ligne de communication LR de premier type.

La ligne de communication LA comporte de façon classique un nombre prédéterminé de porteuses. Parmi ces porteuses, M porteuses sont réservées au transport d'informations dans le sens montant, c'est-à-dire du terminal d'abonné TA vers le DSLAM E et N porteuses L_{1,} L₂, ...L_{N} sont réservées au transport d'informations dans le sens descendant, c'est-à-dire du DSLAM E vers le terminal d'abonné TA.

Les lignes LA₁, LA₂,...LAₖ représentent des lignes voisines de la ligne LA.

Le DSLAM E comprend également un dispositif D de réduction de la consommation électrique apte à mettre en oeuvre un procédé de réduction de la consommation électrique selon l'invention.

En référence à la figure 2, le dispositif de réduction D comprend notamment une unité de traitement 20 équipée d'un microprocesseur, une mémoire morte de type ROM 30 et une mémoire vive de type RAM 40.

La mémoire morte 30 comporte des registres mémorisant un programme d'ordinateur PG comportant des instructions de programme adaptées à mettre en oeuvre un procédé de réduction de la consommation électrique selon l'invention tel que décrit dans la suite de la description.

Le dispositif de réduction D comporte également un module de détermination de groupe DGR, un module de calcul de trafic TRA et un module d'attribution de puissance ATP.

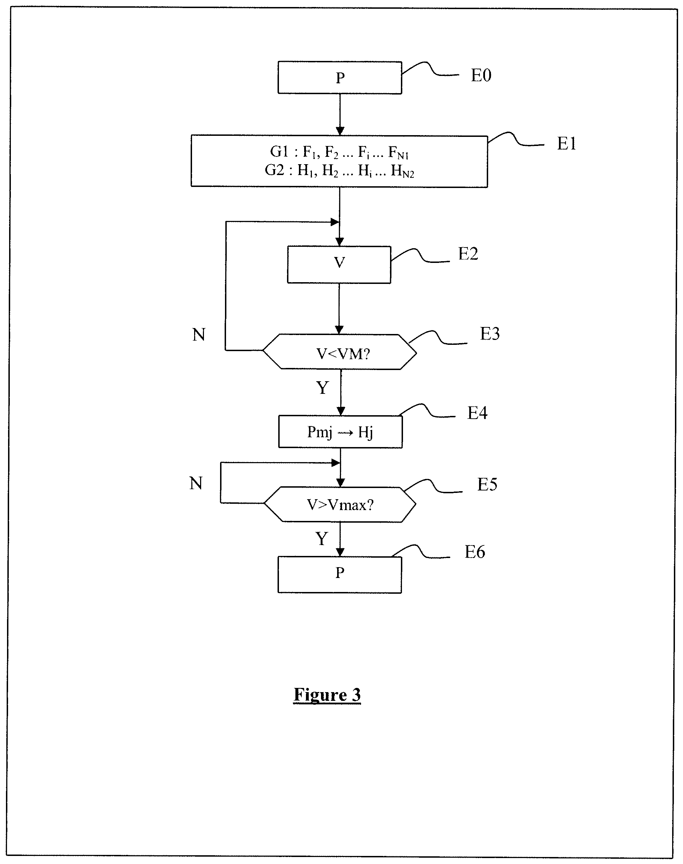

En référence à la figure 3, un mode de réalisation du procédé de réduction de la consommation électrique selon l'invention mis en oeuvre dans le dispositif D va maintenant être décrit.

Lors d'une étape E0 préalable, une puissance prédéterminée P a été affectée à chaque porteuse L₁, L₂, ...L_{N} de l'ensemble N. De façon connue, la puissance affectée à une porteuse correspond au débit maximal de la porteuse, c'est-à-dire à un nombre d'informations maximum pouvant être transmis en une unité de temps déterminée.

Lors d'une première étape E1, le module de détermination de groupe DGR détermine d'une part un premier groupe G1 de porteuses parmi les N porteuses et d'autre part un deuxième groupe G2 de porteuses parmi les N porteuses. Les groupes G1 et G2 sont des groupes distincts, c'est-à-dire qu'une porteuse de l'ensemble des N porteuses ne peut appartenir au premier groupe et au deuxième groupe.

Dans le mode de réalisation décrit, les porteuses de l'ensemble N sont réparties entre le premier groupe G1 et le second groupe G2.

Par exemple, le premier groupe est constitué de N1 porteuses F₁, F₂, ...Fᵢ...F_{N1} et le deuxième groupe est constitué de N2 porteuses H₁,H₂, ...Hⱼ...H_{N2}.

Lors d'une étape E2, le module de calcul de trafic TRA détermine le trafic descendant de la ligne de communication LA, c'est-à-dire le volume d'informations V reçu par unité de temps, à transmettre au terminal d'abonné TA via les N porteuses de la ligne de communication LA.

L'étape E2 est suivie d'une étape E3 lors de laquelle le volume d'informations V est comparé à un volume seuil VM prédéterminé.

Si le volume d'informations V est supérieur au volume seuil VM, l'étape E2 est réitérée.

Si le volume d'informations V est inférieur au volume seuil VM, le module d'attribution de puissance ATP attribue, lors d'une étape E4, une puissance réduite Pmj à chaque porteuse Hⱼ du deuxième groupe G2. La puissance réduite Pmj attribuée à la porteuse Hⱼ est une puissance de valeur inférieure à la puissance P attribuée à chaque porteuse lors de l'étape préalable E0.

La puissance des porteuses F*ᵢ* du premier groupe G1 n'est pas modifiée.

A titre d'alternative, l'étape E4 est précédée d'une étape (non référencée sur la figure) lors de laquelle une requête d'accord pour réduction de débit est envoyée au terminal d'abonné TA et une réponse contenant une acceptation ou un refus de l'abonné est reçue en retour. L'étape E4 est réalisée si la réponse du client contient une acceptation. Dans le cas où la réponse reçue est un refus ou dans le cas où aucune réponse n'est reçue, l'étape E4 n'est pas réalisée et le processus s'arrête.

L'étape E4 est suivie d'une étape E5 lors de laquelle le volume d'informations V reçu par unité de temps est de nouveau déterminé puis comparé à un deuxième volume seuil Vmax prédéterminé. Dans le cas où le volume d'informations est supérieur à un deuxième volume seuil Vmax prédéterminé, la puissance attribuée à chaque porteuse Hj du second groupe est de nouveau la puissance max.

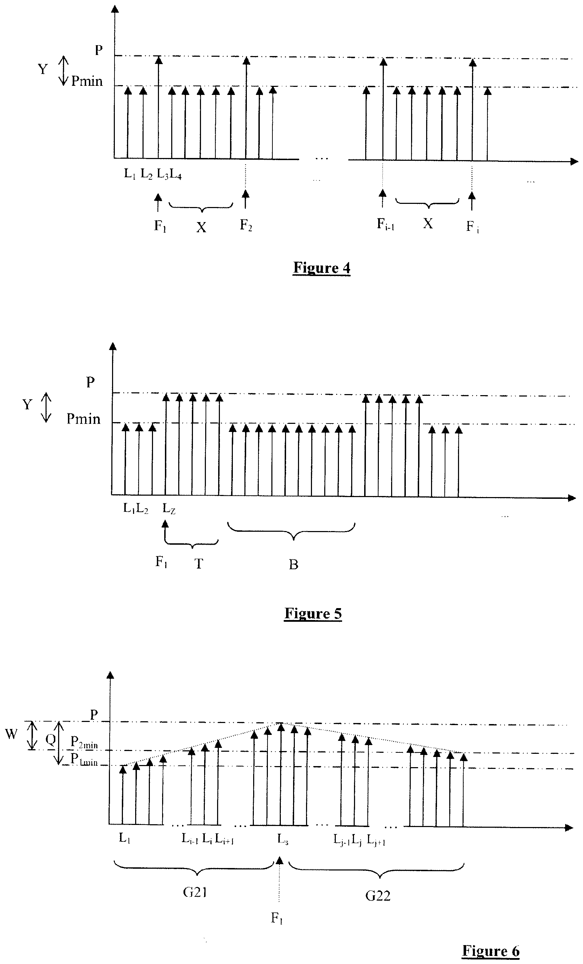

En référence à la figure 4, un premier mode de réalisation particulier va maintenant être décrit.

Dans ce mode de réalisation, le premier groupe déterminé lors de l'étape E1 de détermination de groupe, comprend les porteuses F₁, F₂...F_{N1}.

La première porteuse F₁ du premier groupe G1 est choisie de façon aléatoire. Par exemple, la porteuse F₁ est sélectionnée en fonction d'un paramètre variable au cours du temps, par exemple en fonction d'un paramètre de type horloge.

A titre d'alternative, la première porteuse F₁ est la porteuse Li dont l'indice i est un nombre prédéterminé, par exemple un nombre différent attribué à chaque ligne de communication LA₁, LA₂,....

Un espace entre deux porteuses consécutives du premier groupe G1 est également déterminé. Par exemple, l'espace entre deux porteuses consécutives du premier groupe G1 est un nombre X de porteuses.

La porteuse F₂ est déterminée de façon à ce que X porteuses la sépare de la porteuse F₁. La porteuse Fᵢ est déterminée de façon à ce que X porteuses la sépare de la porteuse Fᵢ₋₁.

Le groupe G2 est composé des porteuses de l'ensemble des N porteuses L₁, L₂...L_{N} n'appartenant pas au premier groupe G1.

Lors de l'étape E4, la puissance attribuée à chaque porteuse du groupe G2 est une puissance prédéterminée Pmin. Pmin correspond à la puissance prédéterminée P diminuée d'une valeur prédéterminée Y.

La configuration de ce mode peut être décrite par la formule : X%Y Z dans laquelle X représente l'espace entre deux porteuses du premier groupe G1, Y représente la diminution de puissance pour les porteuses du second groupe G2 et Z représente l'indice de la porteuse correspondant à la première porteuse F₁.

La figure 4 illustre un exemple dans lequel la première porteuse F₁ est la porteuse d'indice 3 et dans lequel l'espace X entre deux porteuses consécutives du premier groupe est 5.

Le gain sur la consommation électrique est important dès lors que X=10 et Y=10dB.

Un deuxième mode de réalisation de l'invention va maintenant être décrit en référence à la figure 5.

Dans ce mode de réalisation, les porteuses du premier groupe G1 déterminé lors de l'étape E1 sont des groupes de T porteuses consécutives espacées de B porteuses du second groupe G2.

La figure 5 illustre un exemple de ce mode de réalisation dans lequel T=5 et B=10.

Comme dans le mode de réalisation précédent, la position de la première porteuse varie de façon aléatoire ou en fonction d'un paramètre variable.

Dans ce mode de réalisation la puissance réduite Pmin attribuée lors de l'étape E4, aux porteuses du second groupe est une puissance identique pour toutes les porteuses. La puissance réduite Pmin correspond à la puissance prédéterminée P diminuée d'une valeur fixe Y.

La configuration de ce mode peut être décrite par la formule : B%Y Z%T dans laquelle B représente l'espace entre deux suites de porteuses du premier groupe G1, Y représente la diminution de puissance pour les porteuses du second groupe G2, Z représente le début du créneau, c'est-à-dire l'indice de la porteuse correspondant à la première porteuse F₁ du premier groupe et T représente le nombre de porteuses consécutives du premier groupe G1.

Un troisième mode de réalisation de l'invention va maintenant être décrit en référence à la figure 6.

Dans ce mode de réalisation, le premier groupe G1 déterminé lors de l'étape E2 comprend une seule porteuse F1 correspondant à la porteuse Ls de rang S et le second groupe G2 comprend les (N-1) porteuses n'appartenant pas au groupe G1.

Le groupe G2 comprend deux sous groupes : un premier sous groupe G21 comprend les porteuses Li de rang i inférieur au rang S de la porteuse F1 et un deuxième sous groupe G22 comprenant les porteuses Lj de rang j supérieur au rang S de la porteuse F1 du premier groupe G1.

Dans ce mode de réalisation, la puissance réduite attribuée lors de l'étape E4 aux porteuses du deuxième groupe est une puissance variable en fonction du rang des porteuses.

La puissance réduite attribuée à la première porteuse du premier sous groupe G21 est une puissance prédéterminée P₁ₘᵢₙ correspondant à la puissance prédéterminée P diminuée d'une valeur Q.

La puissance réduite attribuée aux autres porteuses du premier sous groupe G21 est une puissance déterminée selon une répartition linéaire entre la puissance P₁ₘᵢₙ et la puissance P.

Comme illustré sur la figure 6, la puissance d'une porteuse Li de rang i du premier sous groupe G21 est supérieure à la puissance de la porteuse précédente Lᵢ₋₁ de rang i-1 et inférieure à la puissance de la porteuse suivante Lᵢ₊₁ de rang i+1.

La puissance attribuée à la dernière porteuse du deuxième sous groupe G22 est une puissance prédéterminée P₂ₘᵢₙ correspondant à la puissance prédéterminée P diminuée d'une valeur W.

La puissance attribuée aux autres porteuses du deuxième sous groupe G22 est une puissance déterminée selon une répartition linéaire entre la puissance P et P₂ₘᵢₙ.

Comme illustré sur la figure 6, la puissance d'une porteuse Lj de rang j du deuxième sous groupe G22 est inférieure à la puissance de la porteuse précédente Lⱼ₋₁ et supérieure à la puissance de la porteuse suivante Lⱼ₊₁.

La configuration de ce mode peut être décrite par la formule : Q%S%W dans laquelle Q représente la diminution de puissance sur la première porteuse du second groupe G2, S représente le rang de la porteuse F₁ du premier groupe et W représente la diminution de puissance sur la dernière porteuse du second groupe G2.

Dans un mode de réalisation particulier de ce mode de réalisation, le rang de la porteuse du premier groupe G1 est 66. Cet indice correspond à une porteuse de fréquence de 284,625 kHz. Des tests ont montré que cette configuration donnait les meilleurs résultats en termes de réduction de consommation électrique et de diminution de l'impact sur les lignes voisines.

## Revendications

1. Procédé de réduction de la consommation électrique associée à une ligne de communication (LA) comprenant un ensemble de N porteuses de puissance prédéterminée (P) aptes à transmettre des informations vers un dispositif de réception (TA) **caractérisé en ce qu'**il comprend les étapes suivantes :
- détermination préalable (E1) d'un premier (G1) et d'un second (G2) groupe comprenant respectivement au moins une porteuse de l'ensemble N;
- détermination (E2) d'un volume d'informations (V) à transmettre sur les N porteuses pendant une unité de temps;
- si le volume déterminé (V) est inférieur à un seuil prédéterminé (VM), attribution (E4) d'une puissance inférieure à la puissance prédéterminée aux porteuses du second groupe, la puissance des porteuses du premier groupe étant maintenue.

2. Procédé de réduction de la consommation électrique selon la revendication 1 **caractérisé en ce que** la puissance attribuée aux porteuses du second groupe est d'une valeur prédéterminée (Pmin).

3. Procédé de réduction de la consommation électrique selon la revendication 1 **caractérisé en ce qu'**une porteuse du premier groupe est comprise entre deux porteuses du second groupe.

4. Procédé de réduction de la consommation électrique selon la revendication 1 **caractérisé en ce que** le premier groupe comporte au moins un ensemble de porteuses consécutives.

5. Procédé de réduction de la consommation électrique selon la revendication 1 **caractérisé en ce que** la puissance attribuée est une valeur comprise entre une valeur de puissance minimum prédéterminée et la puissance prédéterminée.

6. Procédé de réduction de la consommation électrique selon la revendication 1 **caractérisé en ce que** le premier groupe est constitué d'une porteuse.

7. Procédé de réduction de la consommation électrique selon la revendication 6 **caractérisé en ce que** l'ensemble des porteuses est un ensemble ordonné, **en ce que** le second groupe comprend un premier sous groupe contenant les porteuses de rang inférieur au rang de la porteuse du premier groupe et un deuxième sous groupe contenant les porteuses de rang supérieur au rang de la porteuse du premier groupe, **en ce que** la puissance attribuée aux porteuses du premier sous groupe augmente en fonction du rang de la porteuse et **en ce que** la puissance attribuée aux porteuses du second sous groupe diminue en fonction du rang.

8. Dispositif (D) de réduction de la consommation électrique associée à une ligne de communication (LA) comprenant un ensemble de N porteuses de puissance prédéterminée (P) aptes à transmettre des informations vers un dispositif de réception (TA) **caractérisé en ce qu'**il comprend :
- des moyens de détermination (DGR) préalable d'un premier et d'un second groupe comprenant respectivement au moins une porteuse de l'ensemble N;
- des moyens de détermination (TRA) d'un volume d'informations à transmettre sur les N porteuses pendant une unité de temps;
- des moyens d'attribution (ATP) d'une puissance inférieure à la puissance prédéterminée aux porteuses du second groupe si le volume déterminé est inférieur à un seuil prédéterminé, la puissance des porteuses du premier groupe étant maintenue.

9. Produit programme d'ordinateur comprenant des instructions pour mettre en oeuvre les étapes du procédé de réduction de la consommation électrique selon l'une des revendications 1 à 7, lorsqu'il est chargé et exécuté par un processeur.

## Patentansprüche

1. Verfahren zur Verringerung des Stromverbrauchs im Zusammenhang mit einer Kommunikationsleitung (LA), umfassend einen Satz von N Trägern mit vorgegebener Leistung (P), die geeignet sind, Informationen zu einer Empfangsvorrichtung (TA) zu übertragen, **dadurch gekennzeichnet, dass** es die folgenden Schritte umfasst:
- vorheriges Bestimmen (E1) einer ersten (G1) und einer zweiten (G2) Gruppe, jeweils umfassend zumindest einen Träger des Satzes N;
- Bestimmen (E2) eines über die N Träger während einer Zeiteinheit zu übertragenden Informationsvolumens (V);
- Zuweisen (E4) einer Leistung, die geringer ist als die vorgegebene Leistung, an die Träger der zweiten Gruppe, wenn das bestimmte Volumen (V) geringer als ein vorgegebener Schwellwert (VM) ist, wobei die Leistung der Träger der ersten Gruppe erhalten bleibt.

2. Verfahren zur Verringerung des Stromverbrauchs nach Anspruch 1, **dadurch gekennzeichnet, dass** die den Trägern der zweiten Gruppe zugewiesene Leistung einen vorgegebenen Wert (Pmin) hat.

3. Verfahren zur Verringerung des Stromverbrauchs nach Anspruch 1, **dadurch gekennzeichnet, dass** ein Träger der ersten Gruppe zwischen zwei Trägern der zweiten Gruppe liegt.

4. Verfahren zur Verringerung des Stromverbrauchs nach Anspruch 1, **dadurch gekennzeichnet, dass** die erste Gruppe zumindest einen Satz von aufeinanderfolgenden Trägern aufweist.

5. Verfahren zur Verringerung des Stromverbrauchs nach Anspruch 1, **dadurch gekennzeichnet, dass** die zugewiesene Leistung einen Wert zwischen einem vorgegebenen Leistungsminimalwert und der vorgegebenen Leistung hat.

6. Verfahren zur Verringerung des Stromverbrauchs nach Anspruch 1, **dadurch gekennzeichnet, dass** die erste Gruppe aus einem Träger besteht.

7. Verfahren zur Verringerung des Stromverbrauchs nach Anspruch 6, **dadurch gekennzeichnet, dass** der Satz von Trägern ein geordneter Satz ist, dass die zweite Gruppe eine erste Untergruppe, enthaltend die Träger niedrigeren Ranges als der Rang des Trägers der ersten Gruppe, und eine zweite Untergruppe, enthaltend die Träger höheren Ranges als der Rang des Trägers der ersten Gruppe, umfasst, dass die den Trägern der ersten Untergruppe zugewiesene Leistung in Abhängigkeit vom Rang des Trägers steigt und dass die den Trägern der zweiten Untergruppe zugewiesene Leistung in Abhängigkeit vom Rang sinkt.

8. Vorrichtung (D) zur Verringerung des Stromverbrauchs im Zusammenhang mit einer Kommunikationsleitung (LA), umfassend einen Satz von N Trägern mit vorgegebener Leistung (P), die geeignet sind, Informationen zu einer Empfangsvorrichtung (TA) zu übertragen, **dadurch gekennzeichnet, dass** sie Folgendes umfasst:
- Mittel zum vorherigen Bestimmen (DGR) einer ersten und einer zweiten Gruppe, jeweils umfassend zumindest einen Träger des Satzes N;
- Mittel zum Bestimmen (TRA) eines über die N Träger während einer Zeiteinheit zu übertragenden Informationsvolumens;
- Mittel zum Zuweisen (ATP) einer Leistung, die geringer ist als die vorgegebene Leistung, an die Träger der zweiten Gruppe, wenn das bestimmte Volumen geringer als ein vorgegebener Schwellwert ist, wobei die Leistung der Träger der ersten Gruppe erhalten bleibt.

9. Computerprogramm-Produkt, umfassend Instruktionen zum Implementieren der Schritte des Verfahrens zur Verringerung des Stromverbrauchs nach einem der Ansprüche 1 bis 7, wenn es durch einen Prozessor geladen und ausgeführt wird.

## Claims

1. Method for decreasing the electrical power consumption associated with a communication line (LA) comprising a set of N carriers of preset power (P) able to transmit information to a receiving device (TA), said method being **characterized in that** it comprises the following steps:
- determining (E1) beforehand a first group (G1) and a second group (G2) respectively comprising at least one carrier of the set N;
- determining (E2) a volume (V) of information to be transmitted on the N carriers during a unit of time; and
- if the determined volume (V) is lower than a preset threshold (VM), attributing (E4) a power lower than the preset power to the carriers of the second group, the power of the carriers of the first group being maintained.

2. Method for decreasing electrical power consumption according to Claim 1, **characterized in that** the power attributed to the carriers of the second group is of a preset value (Pmin).

3. Method for decreasing electrical power consumption according to Claim 1, **characterized in that** a carrier of the first group is comprised between two carriers of the second group.

4. Method for decreasing electrical power consumption according to Claim 1, **characterized in that** the first group includes at least one set of consecutive carriers.

5. Method for decreasing electrical power consumption according to Claim 1, **characterized in that** the attributed power is a value comprised between a preset minimum power value and the preset power.

6. Method for decreasing electrical power consumption according to Claim 1, **characterized in that** the first group consists of one carrier.

7. Method for decreasing electrical power consumption according to Claim 6, **characterized in that** the set of the carriers is an ordered set, **in that** the second group comprises a first subgroup containing the carriers of rank lower than the rank of the carrier of the first group and a second subgroup containing the carriers of rank higher than the rank of the carrier of the first group, **in that** the power attributed to the carriers of the first subgroup increases as a function of the rank of the carrier and **in that** the power attributed to the carriers of the second group decreases as a function of rank.

8. Device (D) for decreasing the electrical power consumption associated with a communication line (LA) comprising a set of N carriers of preset power (P) able to transmit information to a receiving device (TA), **characterized in that** it comprises:
- means (DGR) for determining beforehand a first group and a second group respectively comprising at least one carrier of the set N;
- means (TRA) for determining a volume of information to be transmitted on the N carriers during a unit of time; and
- means (ATP) for attributing a power lower than the preset power to the carriers of the second group if the determined volume is lower than a preset threshold, the power of the carriers of the first group being maintained.

9. Computer program product comprising instructions for implementing the steps of the method for decreasing electrical power consumption according to one of Claims 1 to 7, when it is loaded into and executed by a processor.
